# EUROPEAN PATENT SPECIFICATION

(11) **EP 2 072 938 B1**
(45) Date of publication and mention of the grant of the patent: **09.08.2017**
(21) Application number: 08157829.6
(22) Date of filing: 09.06.2008
(51) Int. Cl.: F22B 7/08, F22B 21/06, F28D 7/16, F28D 21/00, F28F 9/18, B23K 20/12, F24H 1/40, F24H 8/00, F24H 9/00

(54) **HEAT RECOVERY APPARATUS WITH HEAT EXCHANGER FOR BOILER**
WÄRMERÜCKGEWINNUNGSEINRICHTUNG MIT WÄRMETAUSCHER FÜR HEIZKESSEL
DISPOSITIF DE RÉCUPÉRATION DE CHALEUR AVEC ÉCHANGEUR DE CHALEUR POUR UNE CHAUDIÈRE

(30) Priority: 13.06.2007 IT MO20070199
(43) Date of publication of application: 24.06.2009
(73) Proprietor: A.M. S.R.L., 40139 Bologna (IT)
(72) Inventor: Vanini, Giuseppe, 40139 Bologna (IT)
(74) Representative: Crugnola, Pietro

(56) References cited:
- EP-A2- 1 772 224
- EP-A2- 2 128 537
- DE-A1- 10 244 342
- DE-U1- 29 602 990
- FR-A- 1 580 177
- GB-A- 1 272 711
- US-A- 4 453 496
- US-A- 4 473 034
- US-A1- 2005 006 079
- US-A1- 2006 177 784

## Description

The invention relates to heat exchangers for boilers for domestic use for the production of hot water for washing use and/or for heating rooms, in particular it refers to a heat exchanger that is applicable to a boiler for acting as a primary exchanger in a firebox and/or secondary or recovery exchanger in a condensation boiler.

Condensation boilers enable sensible or latent heat to be exploited that is contained in the fumes produced by combustion, which is heat that in traditional boilers is lost through the flue without being used.

The heat contained in the fumes is in fact recovered by heat exchangers in which the high-temperature fumes exiting the firebox cross a plurality of low-temperature conduits, which are passed through by return water intended for being subsequently heated in the primary heat exchangers associated with the burners. In this manner, the water vapour contained in the fumes, in contact with the low-temperature conduits, condenses, transferring the latent heat to the water and preheating it.

Heat exchangers for boilers are known comprising a tubular element wound on itself in coils so as to form a substantially cylindrical winding arranged around the burner in the firebox. The heat and the combustion fumes spread radially at 360° from the burner and uniformly affect the coils of the exchanger.

In condensation boilers, a second tubular element suitably wound in coils is arranged in a fumes evacuation chamber, which is adjacent to and separated from the firebox and is traversed by the exiting fumes.

The coils of the tubular element are suitably spaced apart so as to allow the passage of the fumes and, at the same time, to contain the dimensions of the exchanger along a longitudinal winding axis.

A drawback of such exchangers consists of the fact that the thermal power transferred to the water, depending on the heat exchange surface of the tubular element, is substantially proportional to the number of coils of the tubular element. A large number of coils, in the case of high-power boilers, entail the boiler having considerable dimensions and occupying considerable space. In addition to that, the length of the boiler has to be proportionate to that of the heat exchanger.

Boilers provided with tube nest heat exchangers are also known, i.e. boilers comprising a plurality of pipes or exchanger conduits positioned parallely to one another and fixed at opposite ends to respective water delivery and return manifolds.

Such tube nests are inserted inside the fireboxes above the burner, to receive the heat and the combustion fumes that rise upwards.

A drawback of such boilers consists of the fact that tube nest exchangers are very bulky and require a firebox, and therefore a boiler, of considerable dimensions.

Another drawback is the position of the tube nests inside the firebox that does not allow the heat produced by the burner to be exploited completely, a part of which heat being absorbed by the walls of the chamber.

Further drawbacks of the aforesaid tube nest heat exchangers arise from the welding processes normally used to make tube nest heat exchangers.

If the ends of the conduits are fixed to the manifolds by TIG ("Tungsten Inert Gas") welding, the conspicuous width of the welding bead that is created at said ends makes it necessary to space each conduit appropriately apart from the adjacent ones in order to avoid superimposing between the welding beads of the adjacent conduits.

With the same overall dimensions of the exchanger, the number of conduits that are associable therewith and, consequently, the heat-exchange surface that is achievable in the heat exchanger, are thus limited.

If a braze-welding process is used to connect the conduits and the manifolds, it is necessary for the manifolds to be covered by a layer of suitable brazing alloy. After the ends of the conduits have been inserted into suitable slots made in the manifolds, the exchanger that is thus assembled is positioned inside a kiln that melts the brazing alloy. The brazing alloy melts and penetrates through capillarity into the interstices between the conduits and the respective slots, achieving the desired weld.

The temperatures required for making brazing nevertheless cause the annealing of the metal with which the exchanger is made and deformations to the structure of the exchanger, with a consequent deterioration of the mechanical features, for example resistance, and difficulties in maintaining the required dimensional tolerances. It is thus necessary to resort sometimes to subsequent mechanical machining in order to restore the dimensional tolerances required for associating the exchanger with the boiler, with a consequent increase in production costs.

Further, in order to make a heat exchanger by brazing, very precise dimensional tolerances are required, with a consequent increase in machining costs. In fact, if the mechanical machinings necessary to make the conduits and the slots do not comply with the required dimensional tolerances, the interstices between the conduits and the respective slots may be too great and the melted brazing alloy may not be able to penetrate by capillarity, not achieving welding between the conduit and the slot.

It is clear how this can seriously compromise the fume or water seal, so that the exchanger has to be rejected.

DE 29602990 discloses a water heater comprising a burner arranged in a combustion chamber and a heat exchanger provided with pipes for the fluid to be heated that are vertical, parallel and concentric to an axis of the burner and are arranged in two circles so as to surround the burner. The ends of the pipes are connected to an upper deflection chamber and to a lower supply chamber, the latter being provided with a supply conduit for the fluid exit and connected to a return chamber having a return conduit for the fluid entry.

US 4473034 discloses a heater module having a cylindrical heat exchanger surrounding a central cavity and a burner. The heat exchanger comprises a plurality of parallel tubes through which is circulated a fluid to be heated that are connected to a bottom manifold and a top manifold. The bottom manifold is covered with a layer of insulation to reduce the temperature differential between an outer annular trough of the bottom manifold and an inner central flat disk which covers the end of the central cavity.

DE 10244342 discloses a heater having a burner and a heat exchanger surrounding burner which is aligned vertical together with the tubes which make up the heat exchanger. The heat exchanger tubes can be arranged in one or more concentric rows round the burner. The flow cross-sections of the tubes decrease with increasing distance from the burner. EP 1772224 discloses a method for manufacturing heat exchangers comprising heat-exchanging means provided with an end and supporting means provided with a surface to be welded and seat means. The method comprises inserting said end of said heat-exchanging means into said seat means, after said inserting there is provided welding through friction stir welding said end at said seat means by means of a welding tool.

US 4453496 discloses a heat recovery apparatus according to the preamble of claim 1.

An object of the invention is to improve the heat exchangers usable in boilers for domestic use.

Another object is to make a heat exchanger that enables the heat exchange surface to be increased with the same overall dimensions, at the same time optimising the flow of fumes and heat through said exchanger.

A further object is also to obtain a heat exchanger having a robust and reliable structure, the assembly of which is relatively simple and fast. According to the invention there is provided a heat-recovery apparatus associable with a boiler for recovering heat from combustion fumes exiting said boiler, comprising containing means suitable for containing heat-exchanger means and provided with an inlet conduit and with an outlet conduit for enabling combustion fumes respectively to enter and exit said apparatus, as defined in claim 1. Further aspects of the invention are defined by the dependent claims. The invention can be better understood and actuated with reference to the attached drawings that illustrate some embodiments thereof by way of non-limiting example, in which:
Figure 1 is a frontal view of the heat exchanger that is the object of the invention and associable with a boiler;
Figure 2 is a section according to plane II-II in Figure 1;
Figure 3 is a frontal view of a version of the exchanger in
Figure 1;

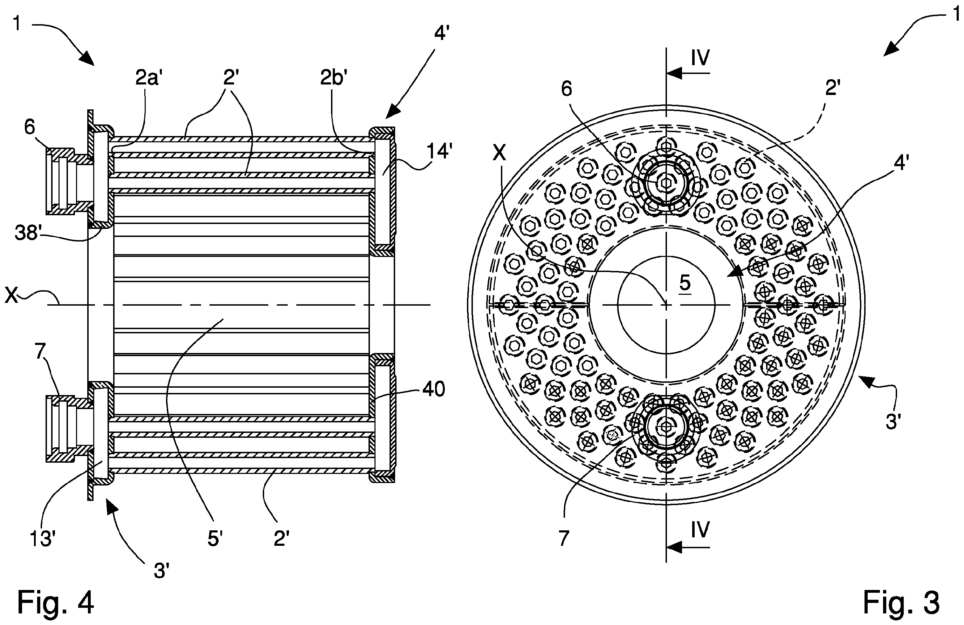

Figure 4 is a section according to plane IV-IV in Figure 3;

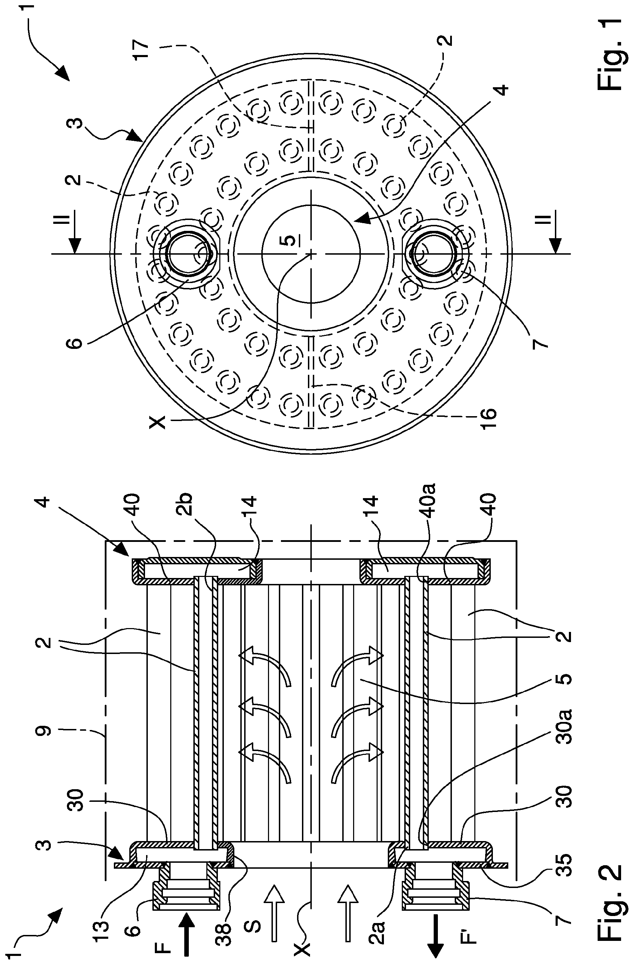

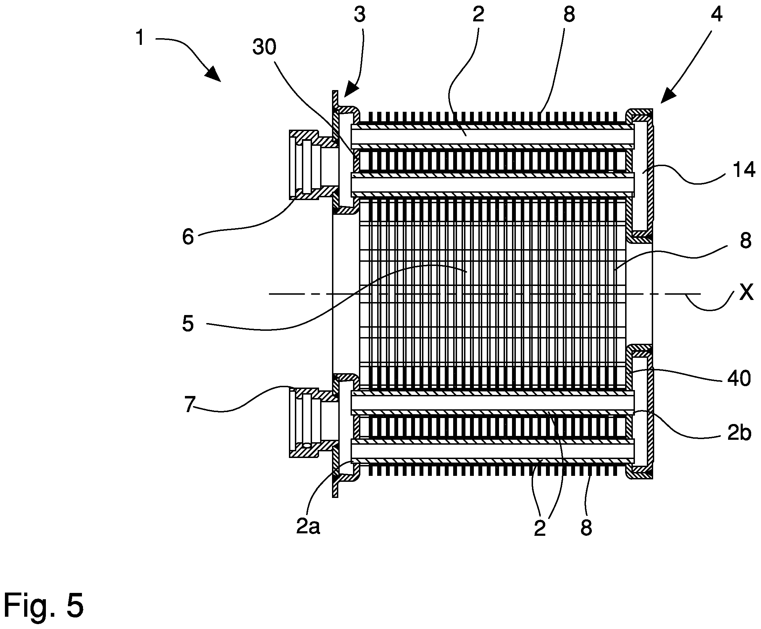

Figure 5 is a cross section of another version of the exchanger in Figure 1;

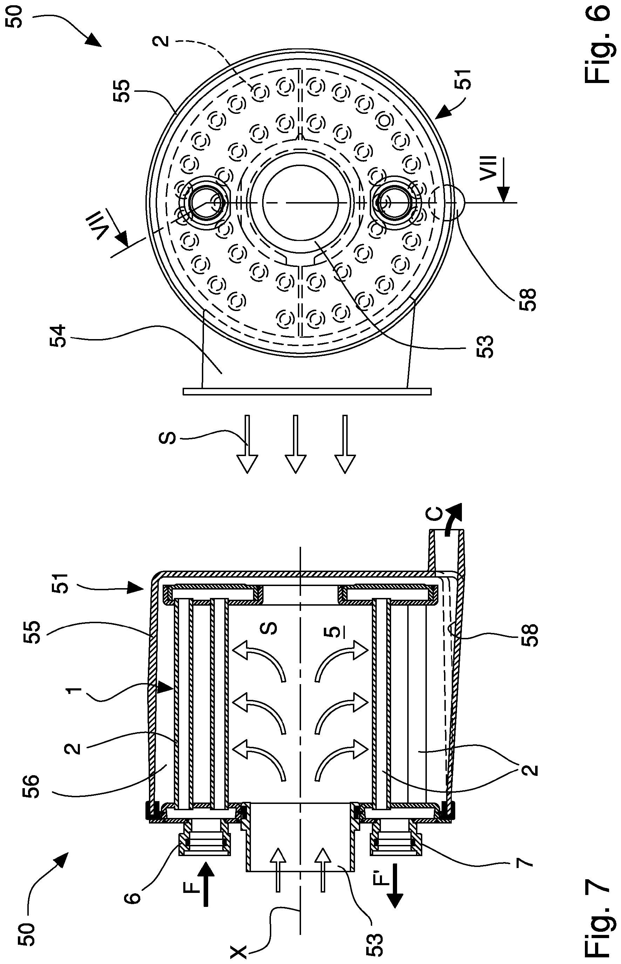

Figure 6 is a frontal view of a heat-recovery apparatus associable with a boiler and comprising the heat exchanger in Figure 1, shown by a broken line;
Figure 7 is a section along the line VII-VII in Figure 6;

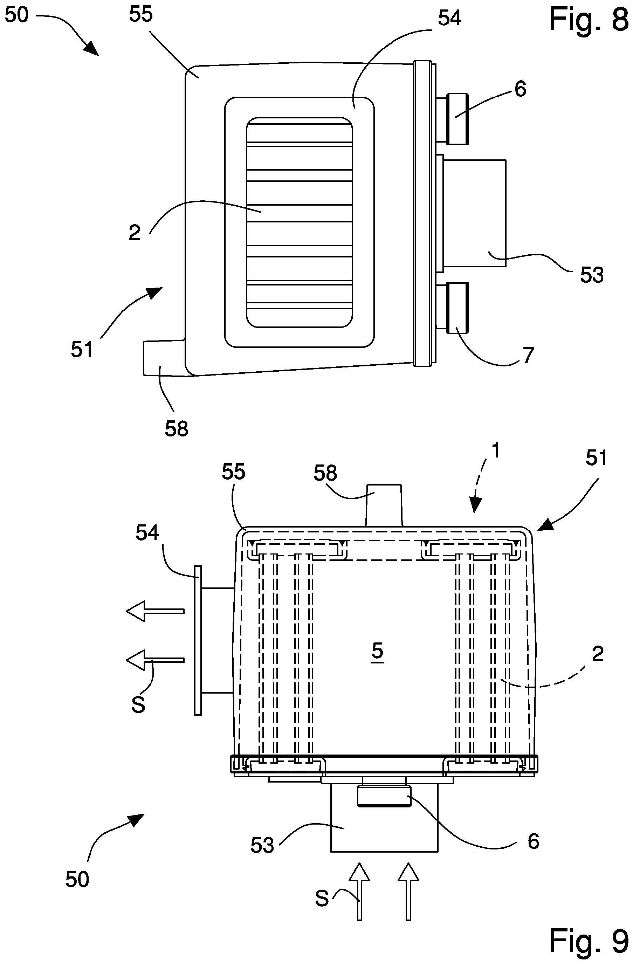

Figure 8 is a side view of the apparatus in Figure 6;
Figure 9 is a top view of the apparatus in Figure 6, in which the heat exchanger is shown as a broken line;

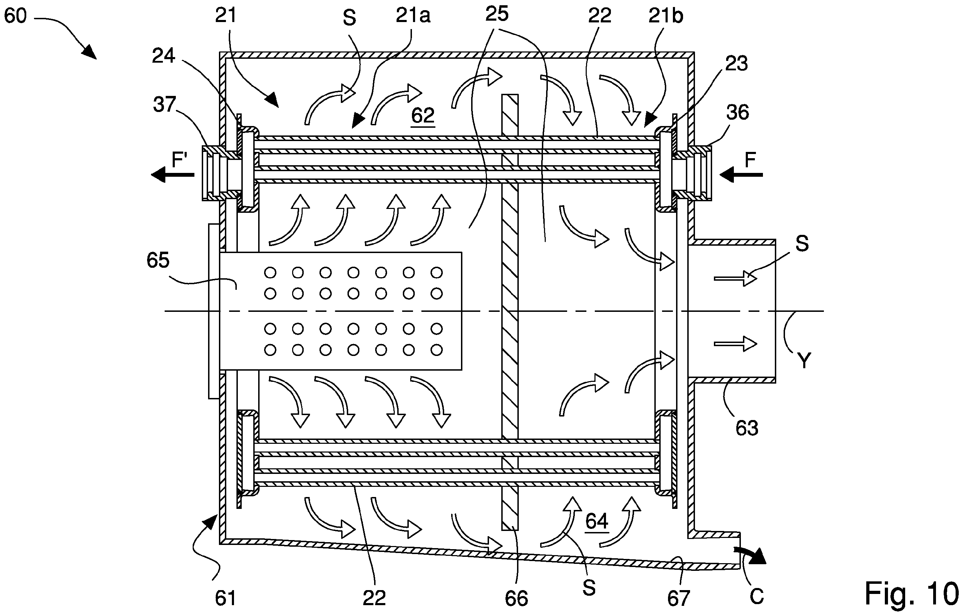

Figure 10 is a schematic cross section of a condensation boiler comprising a heat exchanger according to the invention;

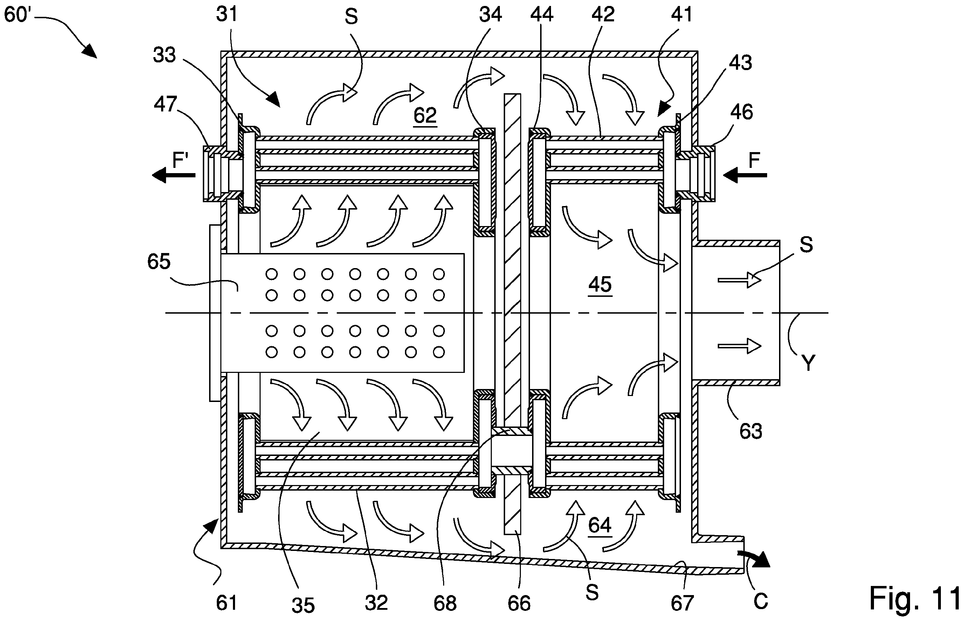

Figure 11 is a schematic cross section of a version of the boiler in Figure 10 comprising two heat exchangers according to the invention;

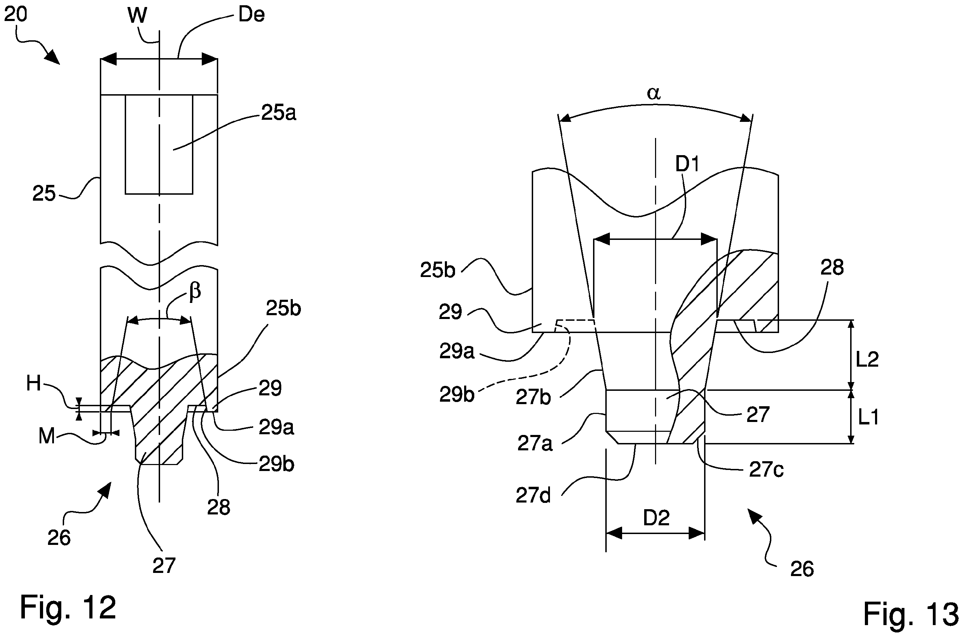

Figure 12 is a fragmentary and partially sectioned frontal view of a welding tool that is not part of the present invention;
Figure 13 is an enlarged partially sectioned view of an operating end of the tool of Figure 12;

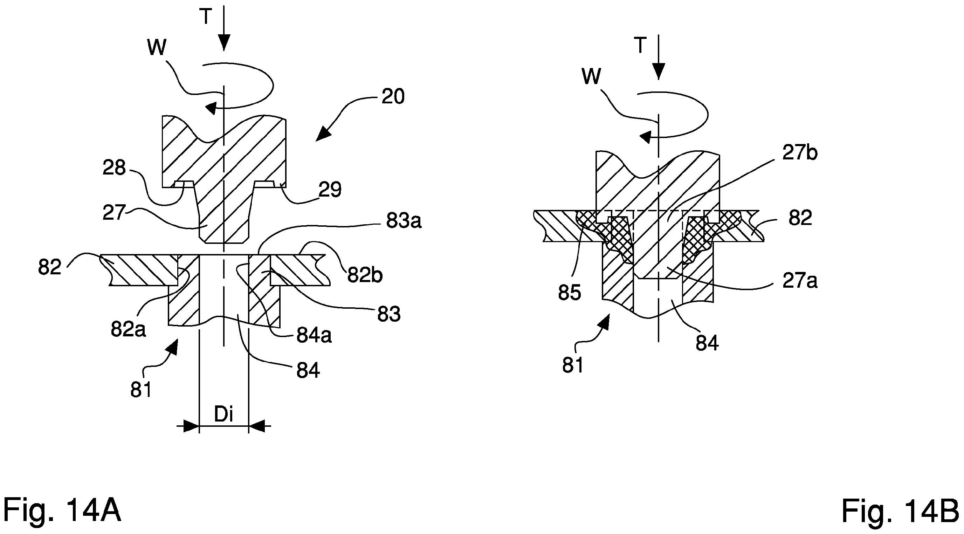

Figures 14A and 14B are partial sections of the tool in Figure 12 in respective welding operating steps for welding two elements that are not part of the present invention;

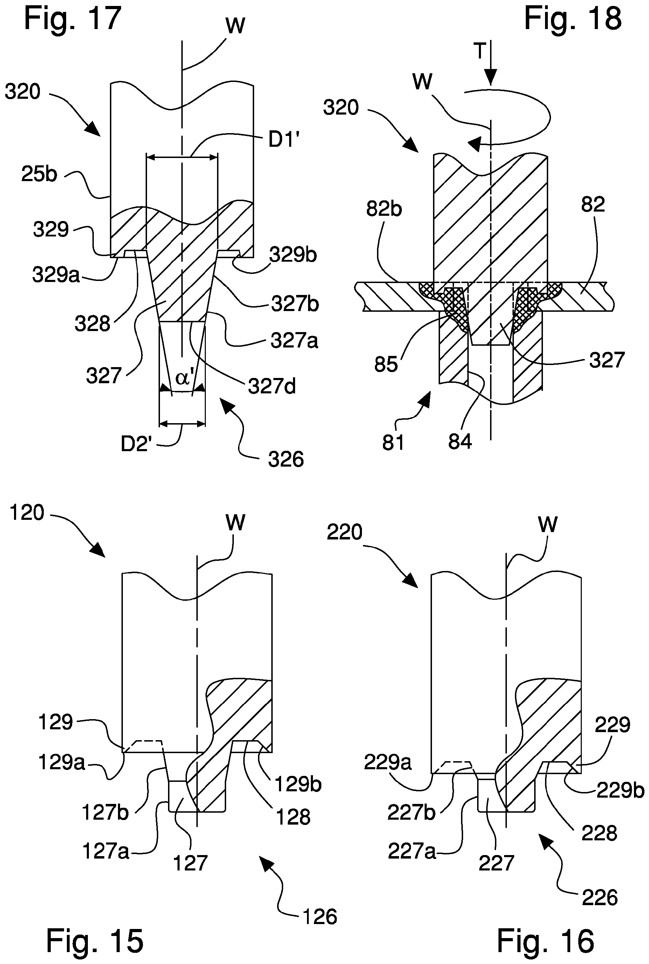

Figures 15 and 16 are partially sectioned frontal views of respective versions of the welding tool of Figure 12;
Figure 17 is a partially sectioned frontal view of a further version of the tool of Figure 12;
Figure 18 is a section of the tool of Figure 16 in a welding operating step for welding two elements.

With reference to Figures 1 and 2, there is illustrated the heat exchanger 1 of the invention, of the so-called tube nest type, comprising a plurality of exchanger conduits 2 arranged adjacent to one another, parallel to a longitudinal axis X and the opposite ends 2a, 2b of which are fixed to manifold means 3, 4 arranged for conveying a fluid to be heated, typically water, to the inlet and the outlet, through said exchanger conduits 2.

The exchanger conduits 2 are arranged around the axis X so as to form an internal space 5 suitable for receiving hot combustion fumes S entering said exchanger 1 and enabling said fumes to be distributed in a substantially radial direction, in uniform and substantially symmetrical manner through said exchanger conduits 2.

The exchanger conduits 2 are fixed to the manifold means 3, 4 angularly spaced apart from one another so as to form one or more rings of conduits substantially concentric to the axis X, defining an internal space 5 having a substantially cylindrical shape and extending along the axis X.

The combustion fumes S can thus exit radially through passages present in adjacent exchanger conduits 2 in the same ring and further passages between adjacent rings.

Figures 1 and 2 illustrate an embodiment of said heat exchanger, in which the exchanger conduits 2 are of such a number and distributed so as to form two concentric and coaxial rings, the exchanger conduits 2 of each ring being angularly spaced apart from one another by a preset angle.

Figures 3 and 4 illustrate a version of the heat exchanger of the invention in which the exchanger conduits 2' are fixed to the manifold means 3', 4' in such a number and are distributed in such a manner as to form four concentric and coaxial rings. The exchanger conduits 2' of the various rings are further angularly staggered so that the exchanger conduit 2' of a ring substantially faces a passage between two contiguous conduits 2' of an adjacent ring. In this manner the passages for the combustion fumes S defined by the exchanger conduits 2' are particularly tortuous in order to increase the heat exchange between the fumes and the conduits.

The manifold means comprises a first manifold 3 and a second manifold 4, to which are fixed respectively a first end 2a and a second end 2b of each exchanger conduit 2.

The ends 2a, 2b are fixed to the manifold means 3, 4 by respective welds made by friction welding with rabbling as explained in detail below in the description.

The first manifold 3 and the second manifold 4 respectively comprise a first annular chamber 13 and a second annular chamber 14 into which the first end 2a and the second end 2b of the exchanger conduits 2 lead.

In particular, the first ends 2a of the exchanger conduits 2 are inserted into corresponding openings 30a provided on an internal wall 30 of the first manifold 3 and welded to the internal wall 30, whilst the second ends 2b of the exchanger conduits 2 are inserted into corresponding openings 40a provided on a respective internal wall 40 of the second manifold 4 and are welded to the respective internal wall 40.

The two manifolds 3, 4 have a substantially circular plan shape. The first manifold 3 is further provided with a central opening 38 that enables the fumes to enter the internal space 5.

The second manifold 4 comprises a respective central opening, which is substantially closed by a containing casing 9 into which the exchanger 1 is inserted in use. The containing casing 9 thus enables combustion fumes S to pass through the exchanger conduits 2 substantially radially.

The first manifold 3 is further provided with an inlet connection 6 of the fluid to be heated F and an outlet connection 7 of the heated fluid F' fixed to an external wall 35 of the first manifold 3 and in flowing communication with the first chamber 13.

The first annular chamber 13 of the first manifold 3 is tightly divided into two distinct volumes by respective baffles 16, 17. In this manner, a part, for example the upper part, of the exchanger conduits 2 is traversed by the inlet fluid whilst the remaining part of the exchanger conduits 2, for example the lower part, is traversed by the outlet fluid coming from the second manifold 4.

The heat exchanger 1 is made of a light alloy, in particular an aluminium alloy, as this metal possesses properties such as lightness, resistance to corrosion, excellent heat conductivity, mechanical resistance and total recyclability that makes the heat exchanger 1 particularly suitable for use in heat exchangers.

The exchanger conduits 2 comprise tubular elements, longitudinally elongated in a direction parallel to the axis X and having a substantially circular section. Alternatively, the tubular elements may have a cross section of any shape, for example elliptic, triangular, square, hexagonal, etc.

Figure 5 illustrates another version of the heat exchanger 1 of the invention that differs from that one disclosed above through the fact that the exchanger conduits 2 are provided with a plurality of fins 8 that increase the heat-exchange surface of the exchanger 1, permitting an increase in performance.

The fins 8 comprise annular elements made of aluminium alloy sheets, provided with holes that enable the assembly thereof, for example through interference, on the exchanger conduits 2.

With reference to Figures 6 to 9, there is illustrated a heat-recovery apparatus 50 associable with a boiler for recovering the sensible and latent heat of the combustion fumes exiting a firebox of said boiler.

The heat-recovery apparatus 50 comprises containing means 51 suitable for housing heat-exchanger means 1 and provided with an inlet conduit 53 and with an outlet conduit 54 respectively for the entry and the exiting of said combustion fumes S.

The exchanger means 1 comprises, in particular, the previously disclosed heat exchanger.

The inlet conduit 53 is substantially coaxial to the axis X of the heat exchanger 1 and shaped so as to convey the combustion fumes S coming from the boiler to the internal space 5 formed by the exchanger conduits 2, said space from which the fumes S can expand radially passing through the aforesaid exchanger conduits 2.

The containing means 51 comprises a substantially cylindrical portion 55 that envelops the heat exchanger 1, forming an annular gap 56 around the exchanger, which is able to convey to the outlet conduit 54 the fumes S that have crossed the exchanger conduits 2. The outlet conduit 54 is fixed to a side opening of the containing means 51.

The containing means 51 further comprises a discharge channel 58 arranged in the lower part of the portion 55 to collect and convey outside the condensate C that is created during cooling of the fumes.

With reference to Figure 10, there is schematically illustrated a condensation boiler 60 for domestic use comprising heat-exchanger means 21 arranged in a firebox 62 and in an outlet chamber 64 of said boiler, for receiving heat respectively from a burner 65 and from hot combustion fumes S exiting said firebox 62. In particular, the heat-exchanger means 21 comprises a first part 21a, substantially facing said burner 65 and acting as a primary heat exchanger, and a second part 21b, placed in the outlet chamber 64 and acting as a secondary or condensation heat exchanger.

The heat-exchanger means 21 comprises a tube nest heat exchanger as disclosed above, in the internal space 25 of which the burner 65 is positioned.

Baffle means 66 is provided inside the boiler to separate the firebox 62 from the outlet chamber 64 and to force the combustion fumes S to exit radially through the exchanger conduits 22 at the first part 21a of the exchanger 21 and enter radially through the exchanger conduits 22 at the second part 21b of the exchanger 21.

The baffle 66 has holes for the passage of the exchanger conduits 22.

The boiler 60 comprises a containing enclosure 61 that encloses the exchanger means 21 and enables the fumes S to be correctly conveyed from the firebox 62 to the outlet chamber 64. The outlet chamber 64 is connected to an exit conduit 63 of the fumes that is substantially aligned on a respective longitudinal axis Y of the boiler.

The containing enclosure 61 has a collecting channel 67 arranged below the exchanger means 21 to collect and convey outside the condensate C that is created during cooling of the fumes S.

The heat exchanger 21 comprises a first manifold 23 provided with an inlet connection 36 of the fluid to be heated F and a second manifold 24 provided with an outlet connection 37 of the heated fluid F'. In this manner, the cold fluid F that enters the boiler is first preheated in the second part 21b of the exchanger 21 using the sensible and latent heat contained in the fumes S produced by combustion and is subsequently heated in the first part 21a of the heat exchanger 21.

With reference to Figure 11, there is illustrated an embodiment of the condensation boiler 60' that differs from the embodiment disclosed above by the fact that it comprises first heat-exchanger means or primary exchangers 31 arranged in the firebox 62 substantially facing the burner 65, and second heat-exchanger means 41 or secondary exchangers arranged in the outlet chamber 64 for recovering heat from hot combustion fumes S and making the fumes condense.

The first heat-exchanger means 31 comprises a tube nest heat exchanger as disclosed above, in the internal space 35 of which the burner 65 is positioned.

Similarly, the second heat-exchanger means 41 comprises a respective tube nest heat exchanger as disclosed above, the internal (cavity) space 45 of which is connected to the exit conduit 63 of the fumes.

The first exchanger 31 and the second exchanger 41 are arranged adjacent to and substantially aligned on the respective axis Y of the boiler 60'.

The baffle 66 separates the firebox 62 from the outlet chamber 64 and forces the combustion fumes S to exit radially through the exchanger conduits 32 of the first exchanger 31 and enter radially through the exchanger conduits 42 of the second exchanger 41.

The exchanger means 31, 41 is enclosed by a containing enclosure 61 that is substantially the same as the embodiment disclosed above.

The first heat exchanger 31 and the second heat exchanger 41 are connected together so as to enable a countercurrent flow of the fluid to be heated inside the boiler 60'. For this purpose, the second heat exchanger 41 comprises a respective first manifold 43 provided with an inlet connection 46 of the fluid to be heated F.

A communication conduit 68 connects the respective second manifold 44 of the second heat exchanger 41 to the second manifold 34 of the first heat exchanger 31.

An outlet connection 47 of the heated fluid F' is provided on the respective first manifold 33 of the first heat exchanger 31.

In this manner, the cold fluid F that enters the boiler 60' is first preheated by the second exchanger 41, which uses the heat contained in the combustion fumes, and subsequently heated in the first heat exchanger 31.

With reference to Figures 12 to 14B, there is illustrated a tool 20 associable with a welding device for performing friction welding with rabbling between an end 83 of a first element 81 and a through seat 82a, made in a substantially flat portion of a second element 82.

The first element 81 is tubular, with a section for example cylindrical, and is provided with a through cavity 84, which is also cylindrical. The end 83 has an external diameter that is less than the external diameter of the tubular element 81, so as to be able to be inserted inside the seat 82a by a defined quantity. The length of the end 83 is substantially the same as a thickness of the second element 82, so that a front surface 83a of said end 83 is substantially coplanar with an abutting surface 82b of said second element 82.

In the case in point, the tool 20 enables the heat exchanger 1 to be assembled by welding the ends 2a, 2b of each exchanger conduit 2 to the seats 30a, 40a of the internal walls 30, 40 of the manifolds 3, 4.

The tool 20 comprises a substantially cylindrical body 25 with an external diameter De, extending along a respective longitudinal axis W and provided with a shank 25a, of known type, shaped in such a way as to adapt to grasping means of a spindle with which the welding device is provided.

The tool 20 further comprises an operating end 26, opposite the shank 25a and configured for interacting with the surfaces to be welded.

Said operating end 26 comprises a front wall 28 from which there protrudes a central protrusion or tip 27, coaxial with said respective longitudinal axis W, shaped and sized so as to be progressively inserted inside the cavity 84 of the end 83, during the welding process, as explained in greater detail further on in the description.

In an embodiment shown in Figures 12 and 13, the central protrusion 27 comprises a first portion 27a with a substantially cylindrical shape and a second portion 27b with a substantially conical shape, the second portion 27b interposed between said first portion 27a and said front wall 28.

The first cylindrical portion 27a is configured for being inserted into the cavity 84 and guiding the advancing movement of the tool 20 in the welding process, whilst the second conical portion 27b is intended for abutting on the front surface 83a and an internal surface 84a of said cavity 84 to perform friction welding with rabbling.

A free frontal face 27d of the central protrusion 27 has guiding means 27c, comprising for example a bevel, for facilitating the insertion of the tool of the cavity 84.

The second conical portion 27b has a vertex angle α comprised between 10° and 70°, a first diameter D1 at the front wall 28, and a second diameter D2 coinciding with the diameter of the first portion 27b or of the free frontal face 27d.

The first portion 27a has a first length L1 along a direction parallel to the longitudinal axis W of said tool, whilst the second portion 27b has a second length L2.

The external diameter De of the tool is approximately 1-1.3 times the value of the external diameter of the tubular element 81. If the cross section of the tubular element is not circular, the external diameter refers to the value of the diameter of the circumference that is containable in said cross section.

The first diameter D1 is 1.1-1.5 times the value of an internal diameter Di of the cavity 84 of the tubular element 81, whilst the second diameter D2 is substantially the same as said internal diameter Di.

The first length L1 and the second length L2, have values that are 0.25-1 times the value of said internal diameter Di.

In the case given by way of non-limiting example of a tubular element 81 having an external diameter equal to 9 mm and an internal diameter Di equal to 4 mm, to be welded to a further element 82, having a thickness of 2.5 mm, the tool 20 has an external diameter De comprised between 9 mm and 12 mm, the first diameter D1 has a value comprised between 4.4 mm and 6 mm, the second diameter D2 has a value that is substantially the same as 4 mm, the first length L1 has a value comprised between 1 mm and 4 mm and the second length L2 has a value comprised between 1 and 4 mm.

The operating end 26 further comprises a peripheral protrusion 29 that protrudes from the front wall 28 and surrounds the central protrusion 27. The peripheral protrusion 29 substantially includes an annular ridge, which has an annular face 29a that is connected to a cylindrical side wall 25b of the body 25 of the tool 20 by a connection having a suitable radius, for example comprised between 0.1 mm and 1 mm.

The annular face 29a is substantially flat and substantially perpendicular to the longitudinal axis W of the tool.

The peripheral protrusion 29 comprises an internal wall 29b that connects the annular face 29a to the front wall 28. This internal wall 29b is tilted so as to form a divergent surface to the outside, having a substantially conical shape. The internal wall 29b forms a respective vertex angle β comprised between 70° and 120°.

In an embodiment of the tool that is not illustrated, the annular face 29a is substantially concave and connected by a suitable connection to the cylindrical side wall 25b and to the internal wall 29b.

The peripheral protrusion 29 has a height H, i.e. an extension along the longitudinal axis W starting from the front wall 28, equal to 0.02-0.15 times the value of the external diameter De of the tool 20. The annular face 29a has a width M equal to 0.01-0.15 times the value of the external diameter De.

If the external diameter De of the tool is, for example 10 mm, the peripheral protrusion 29 has a height H comprised between 0.2 mm and 1.5 mm, whilst the annular face 29a has a width M comprised between 0.1 mm and 1.5mm.

The operation of the tool 20 during the welding process of the end 83 of the first tubular element 81 to the through seat 82a of the second element 82 provides the rotation of the first tubular element 81 around the longitudinal axis W, by driving the spindle of the welding device.

The tool 20, by rotating around the longitudinal axis W at a defined angular speed, is moved to the end 83 so that the first cylindrical portion 27a of the tip 27 can be progressively inserted into the tubular cavity 84 of the end 83 (Figure 14A).

In particular, the tool 20 is advanced along an advance direction T that is substantially parallel to said longitudinal axis W, at a preset and suitable approaching speed.

The second diameter D2 of the first portion 27a is substantially the same as that of the cavity 84 so that the tool 20 can be inserted in a relatively easy manner, if necessary by exercising slight force in the advance direction T to overcome possible interference due to dimensional tolerances of the cavity 84. The insertion of the first portion 27a into the cavity 84 is further facilitated by the bevel 27c.

The angular rotation speed of the tool 20 has a value comprised between 300 and 4500 revolutions per minute.

The first portion 27a thus has the function of correctly guiding the tool 20 along the advance direction T, so that the second conical portion 27b coming into contact with the front surface 83b and the internal surface 84a of said cavity 84, can locally melt the metal by friction and progressively penetrate into the cavity 84. The melting of the metal extends progressively until it also affects the edges of the through seat 82a of the second element 82. Subsequently, the annular face 29a of the peripheral protrusion 29 comes into contact with the abutting surface 82b of the further element 82 (Figure 14B).

The peripheral protrusion 29, with the previously defined rotation speed values, owing to the friction generated by the contact with the abutting surface 82b, provides the heat necessary for melting the metal in the zone around the through seat 82a.

At the same time, owing to the particular conformation of the peripheral protrusion 29, it cooperates with the central protrusion 27 to rabble the melted metal.

The advancing of the tool 20 stops when the front wall 28 of the operating end 26 abuts on the abutting surface 82b.

In this manner, the tool 20 performs circular or annular welding 85 by initially melting the metal inside the tubular element 81, i.e. in the cavity 84, and subsequently outside on the abutting surface 82b and on the front surface 83a. Owing to the rotation of the central protrusion 27 and of the peripheral protrusion 29, the annular welding 85 is achieved by the melted and rabbled metal of the elements 81, 82, this conferring greater homogeneity and therefore resistance and solidity to the weld.

Using the tool 20 of the invention further enables welding of the exchanger conduits 2 to the manifolds 3, 4 to be performed rapidly and easily, thus enabling the exchanger 1 to be assembled simply and quickly.

With reference to Figures 15 and 16, there are illustrated respective versions of the tool 120, 220 that differ from the embodiment previously disclosed by the different dimensions of the central protrusion 127, 227 - i.e. of the first cylindrical portion 127a, 227a and of the second conical portion 127b, 227b - and of the peripheral protrusion 129, 229. In particular, the peripheral protrusion 129, 229 comprises an annular face 129a, 229a having a reduced width and an internal wall 129b, 229b that is more tilted to form a respective vertex angle β comprised between 90° and 120°.

The operation of these versions of the tool does not substantially differ from the one disclosed previously.

The first substantially cylindrical portion 127a, 227a is arranged for guiding the tool 120, 220 in the advancing movement thereof along the advance direction T, whilst the second conical portion 127b, 227b, more or less long, is configured for abutting on and thus melting by friction the front surface 83a and the internal surface 84a of the end 83.

Figure 17 illustrates a further version of the tool 320 that differs from the previously disclosed embodiments as the first portion 327a of the central protrusion 327 also has a conical shape, such as to form with the second portion 327b a single member of conical shape.

The central conical protrusion 327 has a further first diameter D1', at the front face 328, and a further second diameter D2', at a free frontal face 327d of said central protrusion 327.

In this case, the value of the further first diameter D1' is the same as the first diameter D1 defined above, whilst the value of the further second diameter D2' is equal to 0.75-0.85 times the value of the internal diameter Di of the cavity 84.

The total length of the central protrusion 327 is substantially equal to 0.5-2 times the value of said internal diameter Di.

The peripheral protrusion 329 is substantially the same as that of the embodiment in Figures 12 and 13.

As illustrated in Figure 18, during the operation the first portion 327a, as the second diameter D2' is less than the internal diameter Di of the cavity 84, can easily be inserted into the cavity 84 and act as a guide for the tool 320 during the advancing movement thereof.

The second portion 327b, when it comes into contact with the front surface 83b and with the internal surface 84a of the cavity 84, locally melts the metal by friction and progressively penetrates into the cavity 84.

## Claims

1. Heat-recovery apparatus associable with a boiler for recovering heat from combustion fumes (S) exiting said boiler, comprising containing means (9; 51) suitable for containing heat-exchanger means (1) and provided with an outlet conduit (54) for enabling combustion fumes (S) to exit said apparatus (50), wherein said apparatus comprises a substantially cylindrical portion (55) that envelops said heat-exchanger means (1) so as to form an annular gap (56) around said heat-exchanger means (1), wherein said heat-exchanger means (1) comprises at least a heat exchanger for boiler, comprising a plurality of exchanger conduits (2; 2') adjacent and parallel to an axis (X), that are fixed at opposite ends (2a, 2b) to manifold means (3, 4; 3', 4') arranged for conveying a fluid (F) to be heated through said exchanger conduits (2; 2'), which are arranged around said axis (X) so as to form an internal space (5; 5') arranged for receiving combustion fumes (S) entering said exchanger (1) and for enabling a substantially radial and uniform distribution of said combustion fumes (S) exiting through said exchanger conduits (2; 2'), said manifold means comprising first manifold means (3; 3') and second manifold means (4; 4') to which there are respectively fixed a first end (2a; 2a') and a second end (2b; 2b') of each exchanger conduit (2; 2'), said first manifold means (3; 3') and said second manifold means (4; 4') comprising respective annular chambers (13, 14; 13', 14') into which said ends (2a, 2b; 2a', 2b') lead, wherein said first manifold means (3; 3') comprises a central opening (38; 38') for enabling fumes (S) to enter said internal space (5) and wherein said second manifold means (4; 4') comprises a respective central opening, **characterized in that** said annular gap (56) extends beyond said second manifold means (4; 4') and communicates with said respective central opening through a bottom gap defined between said second manifold means (4; 4') and a bottom portion of said containing means (9; 51).

2. Heat-recovery apparatus according to claim 1, wherein said exchanger conduits (2) are fixed to said manifold means (3, 4; 3', 4') angularly spaced apart so as to form at least a ring that is substantially concentric to said axis (X).

3. Heat-recovery apparatus according to claim 2, wherein said exchanger conduits (2; 2') are fixed to said manifold means (3, 4; 3', 4') so as to form a plurality of rings that are substantially concentric to said axis (X), said exchanger conduits (2; 2') being angularly spaced apart so that an exchanger conduit (2; 2') of a ring substantially faces a passage between two contiguous exchanger conduits (2; 2') of an adjacent ring.

4. Heat-recovery apparatus according to claim 3, wherein said ends (2a, 2b) are fixed to said manifold means (3, 4; 3', 4') by respective welds made by friction welding with rabbling.

5. Heat-recovery apparatus according to claim 1, wherein said first manifold means (3; 3') comprises baffle means (16, 17) suitable for dividing into at least two separate volumes said respective annular chamber (13; 13').

6. Heat-recovery apparatus according to any preceding claim, wherein said first manifold means (3; 3') comprises inlet connection means (6) of said fluid to be heated (F) and outlet connection means (7) of said heated fluid (F'), said inlet connection means (6) and said outlet connection means (7) being in flowing communication with respective separate volumes of said annular chamber (13; 13').

7. Heat-recovery apparatus associated to a condensation boiler comprising heat-exchanger means (21; 31, 41) arranged in a firebox (62) and substantially facing a burner (65) of said boiler (60), and arranged in an outlet chamber (64) for recovering heat from hot fumes (S) exiting said firebox (62).

8. Heat-recovery apparatus according to any preceding claim, provided with an inlet conduit (53) for enabling combustion fumes (S) to enter said apparatus (50).

## Patentansprüche

1. Wärmerückgewinnungsvorrichtung koppelbar mit einem Boiler zur Wärmerückgewinnung aus Verbrennungsgasen (S), die den Boiler verlassen, mit einem Einhausungsmittel (9; 51), das geeignet ist, Wärmeaustauschmittel (1) aufzunehmen und das mit einem Auslassrohr (54) versehen ist, um es zu erlauben, dass Verbrennungsgase (S) aus der Vorrichtung (50) austreten, wobei die Vorrichtung einen im Wesentlichen zylindrischen Bereich (55) aufweist, der das Wärmeaustauschmittel (1) umschließt, um so einen ringförmigen Spalt (56) um das Wärmeaustauschmittel (1) zu bilden, wobei das Wärmeaustauschmittel (1) wenigstens einen Wärmeaustauscher für den Boiler umfasst, mit einer Mehrzahl von Austauschrohren (2; 2'), die angrenzend und parallel zu einer Achse (X) sind, die an gegenüberliegenden Enden (2a, 2b) an einem Verteilermittel (3, 4; 3', 4') befestigt sind, das angeordnet ist, um ein zu heizendes Fluid (F) durch die Austauschrohre (2; 2') zu fördern, die um die Achse (X) herum angeordnet sind, um so einen Innenraum (5; 5') zu bilden, der dazu ausgebildet ist, Verbrennungsgase (S) zu erhalten, die in den Wärmetauscher (1) eintreten, und um eine im Wesentlichen radiale und gleichmäßige Verteilung der Verbrennungsgase (S) zu erlauben, die durch die Austauschrohre (2; 2') austreten, wobei das Verteilermittel ein erstes Verteilermittel (3; 3') und ein zweites Verteilermittel (4; 4') aufweist, an dem jeweils ein erstes Ende (2a; 2a') und ein zweites Ende (2b; 2b') von jedem Austauschrohr (2; 2') befestigt ist, wobei das erste Verteilermittel (3; 3') und das zweite Verteilermittel (4; 4') entsprechende ringförmige Kammern (13, 14; 13', 14') aufweisen, in welche die Enden (2a, 2b; 2a', 2b') führen, wobei das erste Verteilermittel (3; 3') eine zentrale Öffnung (38; 38') aufweist, um es zu erlauben, dass Gase (S) in den Innenraum (5) eintreten, und wobei das zweite Verteilermittel (4; 4') eine entsprechende zentrale Öffnung aufweist, **dadurch gekennzeichnet, dass** der ringförmige Spalt (56) sich über das zweite Verteilermittel (4; 4') hinaus erstreckt und mit der betreffenden zentralen Öffnung durch einen Bodenspalt in Verbindung steht, der zwischen dem zweiten Verteilermittel (4; 4') und einem Bodenbereich des Einhausungsmittels (9; 51) definiert ist.

2. Wärmerückgewinnungsvorrichtung nach Anspruch 1, bei der die Austauschrohre (2) an dem Verteilermittel (3, 4; 3', 4') winkelmäßig beabstandet befestigt sind, um so wenigstens einen Ring zu bilden, der im Wesentlichen konzentrisch zu der betreffenden Achse (X) ist.

3. Wärmerückgewinnungsvorrichtung nach Anspruch 2, bei der die Austauschrohre (2; 2') an dem Verteilermittel (3, 4; 3', 4') befestigt sind, um so eine Mehrzahl von Ringen zu bilden, die im Wesentlichen konzentrisch zu der genannten Achse (X) sind, wobei die Austauschrohre (2; 2') winkelmäßig beabstandet sind, so dass ein Austauschrohr (2; 2') eines Rings im Wesentlichen einem Durchlass zwischen zwei angrenzenden Wärmeaustauscherrohren (2; 2') eines benachbarten Rings gegenüberliegt.

4. Wärmerückgewinnungsvorrichtung nach Anspruch 3, bei der die Enden (2a, 2b) an dem Verteilermittel (3, 4; 3', 4') durch entsprechende Verschweißungen mit Hilfe von Reibrührverschweißen befestigt sind.

5. Wärmerückgewinnungsvorrichtung nach Anspruch 1, bei der das erste Verteilermittel (3; 3') ein Trennwandmittel (16, 17) aufweist, das geeignet ist, die betreffende ringförmige Kammer (13; 13') in wenigstens zwei separate Volumen aufzuteilen.

6. Wärmerückgewinnungsvorrichtung gemäß irgendeinem vorhergehenden Anspruch, bei dem das erste Verteilermittel (3; 3') ein Einlassverbindungsmittel (6) für das zu heizende Fluid (F) und ein Auslassverbindungsmittel (7) für das erhitzte Fluid (F') aufweist, wobei das Einlassverbindungsmittel (6) und das Auslassverbindungsmittel (7) in fließmäßiger Verbindung mit zugeordneten separaten Volumina der ringförmigen Kammer (13; 13') ist.

7. Wärmerückgewinnungsvorrichtung, die mit einem Kondensatboiler gekoppelt ist, umfassend ein Wärmeaustauschmittel (21; 31, 41), das in einem Flammenraum (62) angeordnet ist und im Wesentlichen einem Brenner (65) des Boilers (60) zugewandt ist, und das in einer Auslasskammer (64) angeordnet ist, um von den heißen Abgasen (S), die aus dem Flammenraum (62) austreten, Wärme rückzugewinnen.

8. Wärmerückgewinnungsvorrichtung gemäß irgendeinem vorherigen Anspruch, die mit einem Einlasskanal (53) versehen ist, um es zu erlauben, dass Verbrennungsgase (S) in die Vorrichtung (50) eintreten.

## Revendications

1. Appareil de récupération de chaleur apte à être associé à une chaudière pour récupérer la chaleur de fumées de combustion (S) sortant de ladite chaudière, comprenant des moyens de conteneur (9 ; 51) aptes à contenir des moyens d'échangeur de chaleur (1) et pourvu d'un conduit de sortie (54) pour permettre aux fumées de combustion (S) de sortir dudit appareil (50), dans lequel ledit appareil comprend une portion sensiblement cylindrique (55) qui enveloppe lesdits moyens d'échangeur de chaleur (1) de manière à former un interstice annulaire (56) autour desdits moyens d'échangeur de chaleur (1), dans lequel lesdits moyens d'échangeur de chaleur (1) comprennent au moins un échangeur de chaleur pour chaudière, comprenant une pluralité de conduits d'échangeur (2 ; 2') adjacents et parallèles à un axe (X), qui sont fixés à des extrémités opposées (2a, 2b) à des moyens collecteur (3, 4 ; 3', 4') agencés pour acheminer un fluide (F) à chauffer à travers lesdits conduits d'échangeur (2 ; 2'), qui sont agencés autour dudit axe (X) de manière à former un espace intérieur (5 ; 5') agencé pour recevoir des fumées de combustion (S) entrant dans ledit échangeur (1) et pour permettre une distribution sensiblement radiale et uniforme desdites fumées de combustion (S) sortant à travers lesdits conduits d'échangeur (2 ; 2'), lesdits moyens collecteur comprenant des premiers moyens collecteur (3 ; 3') et des seconds moyens collecteur (4 ; 4') auxquels sont fixées respectivement une première extrémité (2a ; 2a') et une seconde extrémité (2b ; 2b') de chaque conduit d'échangeur (2 ; 2'), lesdits premiers moyens collecteur (3 ; 3') et lesdits seconds moyens collecteur (4 ; 4') comprenant des chambres annulaires respectives (13, 14 ; 13', 14') dans lesquelles lesdites extrémités (2a, 2b ; 2a', 2b') conduisent, dans lequel lesdits premiers moyens collecteur (3 ; 3') comprennent une ouverture centrale (38 ; 38') pour permettre aux fumées (S) d'entrer dans ledit espace intérieur (5) et dans lequel lesdits seconds moyens collecteur (4 ; 4') comprennent une ouverture centrale respective, **caractérisé en ce que** ledit interstice annulaire (56) s'étend au-delà desdits seconds moyens collecteur (4 ; 4') et communique avec ladite ouverture centrale respective à travers un interstice inférieur défini entre lesdits seconds moyens collecteur (4 ; 4') et une portion inférieure desdits moyens de conteneur (9 ; 51).

2. Appareil de récupération de chaleur selon la revendication 1, dans lequel lesdits conduits d'échangeur (2) sont fixés auxdits moyens collecteur (3, 4 ; 3', 4') angulairement espacés les uns des autres de manière à former au moins un anneau qui est sensiblement concentrique audit axe (X).

3. Appareil de récupération de chaleur selon la revendication 2, dans lequel lesdits conduits d'échangeur (2 ; 2') sont fixés auxdits moyens collecteur (3, 4 ; 3', 4') de manière à former une pluralité d'anneaux qui sont sensiblement concentriques audit axe (X), lesdits conduits d'échangeur (2 ; 2') étant angulairement espacés les uns des autres de telle manière qu'un conduit d'échangeur (2 ; 2') d'un anneau se trouve sensiblement en regard d'un passage entre deux conduits d'échangeur contigus (2 ; 2') d'un anneau adjacent.

4. Appareil de récupération de chaleur selon la revendication 3, dans lequel lesdites extrémités (2a, 2b) sont fixées auxdits moyens collecteur (3, 4 ; 3', 4') par des soudures respectives réalisées par soudage par friction avec raclage.

5. Appareil de récupération de chaleur selon la revendication 1, dans lequel lesdits premiers moyens collecteur (3 ; 3') comprennent des moyens déflecteurs (16, 17) aptes à diviser en au moins deux volumes distincts ladite chambre annulaire respective (13 ; 13').

6. Appareil de récupération de chaleur selon l'une quelconque des revendications précédentes, dans lequel lesdits premiers moyens collecteur (3 ; 3') comprennent des moyens de raccordement d'entrée (6) dudit fluide à chauffer (F) et des moyens de raccordement de sortie (7) dudit fluide chauffé (F'), lesdits moyens de raccordement d'entrée (6) et lesdits moyens de raccordement de sortie (7) étant en communication fluidique avec des volumes distincts respectifs de ladite chambre annulaire (13 ; 13').

7. Appareil de récupération de chaleur associé à une chaudière à condensation comprenant des moyens d'échangeur de chaleur (21 ; 31, 41) agencés dans un foyer de combustion (62) et sensiblement en regard d'un brûleur (65) de ladite chaudière (60), et agencés dans une chambre de sortie (64) pour récupérer la chaleur de fumées chaudes (S) sortant dudit foyer de combustion (62).

8. Appareil de récupération de chaleur selon l'une quelconque des revendications précédentes, pourvu d'un conduit d'entrée (53) pour permettre aux fumées de combustion (S) d'entrer dans ledit appareil (50).
